# EUROPÄISCHE PATENTSCHRIFT

(11) **EP 3 123 213 B1**
(45) Veröffentlichungstag und Bekanntmachung des Hinweises auf die Patenterteilung: **06.06.2018**
(21) Anmeldenummer: 15713705.0
(22) Anmeldetag: 27.03.2015
(51) Int. Cl.: G02B 3/14, G02B 26/00

(54) **OPTOFLUIDISCHES BAUELEMENT**
OPTO-FLUIDIC COMPONENT
ÉLÉMENT OPTOFLUIDIQUE

(30) Priorität: 27.03.2014 DE 102014205790
(43) Veröffentlichungstag der Anmeldung: 01.02.2017
(73) Patentinhaber: Albert-Ludwigs-Universität Freiburg, 79098 Freiburg (DE)
(72) Erfinder: SCHUHLADEN, Stefan, 76461 Muggensturm (DE); KOPP, Daniel, 78733 Aichhalden (DE); MUELLER, Philipp, 79104 Freiburg (DE); ZAPPE, Hans, CH-8044 Zürich (CH)
(74) Vertreter: Grünecker Patent- und Rechtsanwälte PartG mbB
(86) Internationale Anmeldenummer: PCT/EP2015/056706
(87) Internationale Veröffentlichungsnummer: WO 2015/144880

(56) Entgegenhaltungen:
- EP-A1- 2 239 600
- EP-A2- 1 625 437
- US-A1- 2006 044 448
- US-A1- 2006 044 640
- US-A1- 2011 157 711
- US-A1- 2013 306 480

## Beschreibung

Die vorliegende Erfindung bezieht sich auf ein optofluidisches Bauelement zum Ausbilden eines optischen Pfades für elektromagnetische Strahlung. Seit einiger Zeit wurden Konzepte entwickelt, um verschiedene optische Bauelemente, insbesondere mit veränderlichen Optiken mit Hilfe optofluidischer Anordnungen zu realisieren. Im Bereich stark miniaturisierter Anordnungen basieren diese im Stand der Technik vorgestellten Konzepte, z. B. für Endoskopsonden, meist auf optischen Komponenten aus festen Materialien, die nicht durchstimmbar sind, beispielsweise feststehende Blenden oder festbrennweitige Linsen. Damit ist die Funktionalität dieser Systeme eingeschränkt. Zudem müssen bei komplexen optischen Systemen mehrere Einzelkomponenten präzise zueinander ausgerichtet und positioniert werden. Jede optische Komponente muss außerdem einzeln gefertigt werden. Daher steigt im Allgemeinen der Aufwand für Fertigung und Systemzusammenbau mit dem Grad der Miniaturisierung.

Die optofluidische Technologie ist eine Möglichkeit, optische Bauelemente mit einer Vielzahl von Funktionen ohne bewegte mechanische Teile zu realisieren. In den letzten Jahren hat sich die Optofluidik als ein neues Paradigma für Mikrooptik von einer Nischentechnologie zu einem weit verbreiteten Ansatz in den verschiedensten Gebieten entwickelt. Optofluidische Bauelemente nutzen die Wechselwirkung von Licht mit einem Fluid, meistens einer Flüssigkeit, gelegentlich aber auch einem Gas, um spezifische optische Funktionen zu realisieren. Gegenwärtig existieren drei wesentliche Anwendungsgebiete für optofluidische Bauelemente:
1. Lab-on-a-Chip (LoC), insbesondere photonische LoC (PhLoC)
2. Abstimmbare optische Bauteile, wie flüssige Linsen, flüssige Blenden, flüssige Spiegel, abstimmbare Faseroptik und dergleichen
3. Displays

Allgemein beinhalten die Abstimmmechanismen für optofluidische Bauteile den fluidischen Austausch einer Flüssigkeit durch eine andere, das Anpassen eines Flüssigkeitsstroms (meist eines laminaren Stroms), elektrooptische Effekte, eine optische Ansteuerung wie optische Pinzetten, eine thermische Aktuierung, beispielsweise über den thermokapillaren Effekt, direkte Elektrobenetzung (Electrowetting, EW), das sogenannte Electrowetting-on-Dielectrics (EWOD), Dielektrophorese (DEP), Druck, das Ausüben äußerer Kräfte über Membranen und Inertialkräfte. Allerdings lassen sich viele der bislang entwickelten Konzepte nicht weit genug miniaturisieren, um die heutigen Anforderungen bezüglich der Miniaturisierung in der Optik zu erfüllen. Klassische optische Bauelemente, die auf festen Materialien wie Glas oder Polymeren basieren, sind daher in Anwendungsgebieten wie der digitalen Fotografie, für medizinische Endoskope, biomedizinische Sensoren, mobile Geräte und dergleichen immer noch überwiegend vertreten.

Bekannte optofluidische Bauelemente sind beispielsweise die flüssigen Linsen, die in dem Artikel Kuiper, S., B. H. W. Hendriks: Variable-focus liquid lens for miniature cameras. Applied Physics Letters, 85(7):1128-1130, 2004, oder in Krupenkin, T., S. Yang, and P. Mach: Tunable liquid microlens. Applied Physics 82(3):316-318, 2003, beschrieben sind. Eine kommerzialisierte Lösung wird von der französischen Firma Varioptik in Lyon angeboten.

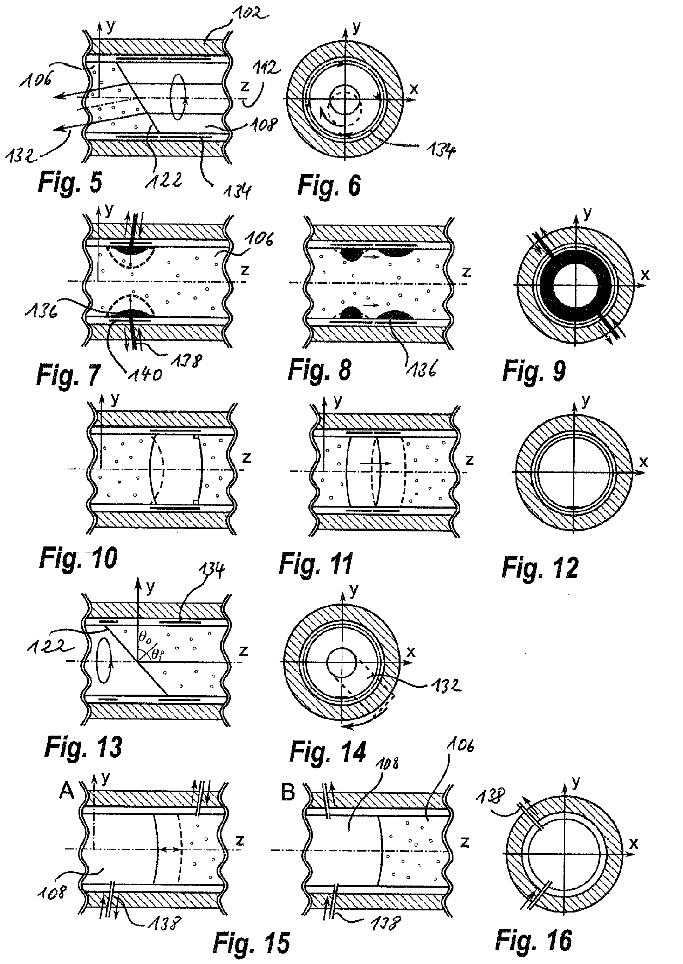

Das Prinzip einer flüssigen Linse mit variablem Fokus ist auch in dem US-Patent 6,369,954 B1 gezeigt. Wie hier beispielsweise aus der Fig. 6 hervorgeht, befinden sich Elektroden an der Außenseite einer dielektrischen Kammer und in der Nähe einer Kontaktregion, deren Benetzbarkeit nach dem Elektrobenetzbarkeitsprinzip durch die von den Elektroden vorhandenen Potenziale beeinflusst wird. Die Brennweite der Linse kann durch entsprechende Variation der Spannung an den Elektroden verändert werden.

Auf dem Prinzip der Elektrobenetzung basieren außerdem abgleichbare Flüssigprismen, wie z.B. aus dem Artikel Smith, Neil R., Don C. Abeysinghe, Joseph W. Haus, and Jason Heikenfeld: Agile wideangle beam steering with electrowetting microprisms. Optics Express, 14(14):6557-6563, 2006, bekannt.

Weiterhin existieren abstimmbare Flüssigaperturen (im englischen Sprachraum auch oft als "liquid iris" bezeichnet), wie sie beispielsweise in dem US-Patent 7,245,347 B2, und den Publikationen Kimmle, Christina, Christoph Doering, Anna Steuer, and Henning Fouckhardt: Compact dynamic microfluidic iris array. In Proceedings of SPIE: Optomechanics 2011 - Innovations and Solutions, volume 8125, pp. 548-550, DOI: 10.1117/12.892450, 2011; Hongbin, Yu, Zhou Guangya, Chau Fook Siong, and Lee Feiwen: Optofluidic variable aperture. Optics Letters, 33:548-550, 2008; Ren, Hongwen and Shin TsonWu: Optical switch using a deformable liquid droplet. Optics Letters, 35(22):3826-3828, 2010; Tsai, C. Gary and J. Andrew Yeh: Circular dielectric liquid iris. Optics Letters, 35(14):2484-2486, 2010; Müller, Philipp, Nils Spengler, Hans Zappe, and Wolfgang Mönch: An optofluidic concept for a tunable micro-iris. Journal of Microelectromechanical Systems, 19(6):1477-1484, 2010; dem US-Patent 7,859,741 B2, sowie den Artikeln Draheim, J., T. Burger, J.G. Korvink, and U. Wallrabe: Variable aperture stop based on the design of a single chamber silicone membrane lens with integrated actuation. Optics Letters, 36:2032-2034, 2011; Murade, C. U., J. M. Oh, D. van den Ende, and F. Mugele: Electrowetting driven optical switch and tunable aperture. Optics Express, 19(16):15525-15531, 2011; und Müller, Philipp, Roland Feuerstein, and Hans Zappe: Integrated optofluidic microiris. Journal of Microelectromechanical Systems, Vol. 21, No. 5, October 2012, p. 1156-1164; beschrieben sind. Dabei werden verschiedene Prinzipien angewendet, um eine opake Phase in definierter Art und Weise in den Strahlengang einzubringen, so dass eine Apertur mit einem veränderbaren Öffnungsdurchmesser entsteht.

Abstimmbare Flüssigspiegel können zum einen als Spiegel an der Grenzfläche fest-flüssig realisiert werden. Dabei kann, wie in dem Artikel Wan, Zhiliang, Hongjun Zeng, and Alan Feinerman: Area-tunable micromirror based on electrowetting actuation of liquid-metal droplets. Applied Physics Letters, 89:201107 (3pp), 2006, gezeigt, die Spiegelfläche abstimmbar sein oder wie in Bucaro, Michael A., Paul R. Kolodner, J. Ashley Taylor, Alex Sidorenko, Joanna Aizenberg, and Tom N. Krupenkin: Tunable liquid optics: electrowetting-controlled liquid mirrors based on self-assembled janus tiles. Langmuir, 25:3876 - 3879, 2009 gezeigt, die Krümmung abstimmbar sein. Der Artikel Llobera, A., S. Demming, R. Wilke, and S. Büttgenbach: Multiple internal reflection poly(dimethylsiloxane) systems for optical sensing. Lab Chip, 7:1560-1566, 2007, schließlich offenbart einen Fest-Flüssig-Spiegel, der auf Totalreflexion beruht.

Weiterhin existieren auch Spiegel, die auf einer Totalreflexion an Flüssig-Flüssig-Grenzflächen basieren, wie dies beispielsweise in Müller, Philipp, Daniel Kopp, Andreu Llobera, and Hans Zappe: Optofluidic router based on tunable liquid-liquid mirrors. Lab Chip, 2014, 14, 737-743, dargestellt ist. Schließlich existieren auch schaltbare Flüssigfilter und Flüssigblenden, wie sie beispielsweise in Müller, Philipp, Anton Kloss, Peter Liebetraut, Wolfgang Mönch, and Hans Zappe: A fully integrated optofluidic attenuator. Journal of Micromechanics and Microengineering, 21(12):125027-125040, 2011, gezeigt sind.

Allen diesen bekannten optischen Bauelementen ist gemeinsam, dass sie stets als Einzelkomponenten realisiert werden. Will man daher ein komplexeres Bauteil mit mehreren derartigen Komponenten realisieren, ist zum einen der Aufbau und die Herstellung teuer, zum anderen die Justierung der Einzelkomponenten mit Bezug aufeinander schwierig. Andererseits existieren diverse Vorschläge für hochintegrierte flexible Polymersubstrate, wie beispielsweise Dünnfilmelektrodenarrays, die für neuronale Implantate eingesetzt werden. Durch Einsatz von Reinraumfabrikationsbedingungen können Elektroden mit hoher Strichdichte auf einer vorgegebenen Fläche strukturiert werden. Beispielsweise beschreibt Ordonez, Juan S., Christian Boehler, Martin Schuettler, and Thomas Stieglitz: Improved polyimide thin-film electrodes for neural implants. In 34th Annual International Conference of the IEEE EMBS, pages 5134-5137, 2012, dass Bahnbreiten von 10 µm mit Abständen von 12 µm wiederholt strukturiert werden können. Weiterhin können dünne Polymersubstrate, die meist aus Polyimid hergestellt sind, bei Anlage an weiches biologisches Gewebe optimalen Kontakt aufgrund ihrer hohen Flexibilität herstellen.

Die Verwendung von Polyimid bei flexiblen Substraten ist für eine Vielzahl von Anwendungen bereits bekannt, wie dies die folgenden Beispiele belegen: flexible Displays mit aktiver Matrix werden in Gelinck, Gerwin H. et al.: Flexible active-matrix displays and shift registers based on solution-processed organic transistors. Nature Materials, 3:106-110, 2004, beschrieben. Hier werden Metallelektroden in Kombination mit einem organischen Halbleiter und einem Gate-Dielektrikum auf der Oberseite von Polyimidfolien verwendet.

Kim, Dae Hyeong, Jong Hyun Ahn, Hoon Sik Kim, Keon Jae Lee, Tae Ho Kim, Chang Jae Yu, Ralph G. Nuzzo, and John A. Rogers: Complementary logic gates and ring oscillators on plastic substrates by use of printed ribbons of single-crystalline silicon. IEEE Electron Device Letters, 29(1):73-76, 2008, zeigt einen flexiblen Ringoszillator und demonstriert damit die Funktionalität eines elektrischen logischen Schaltkreises auf einem flexiblen Substrat.

Weiterhin beschreibt beispielsweise Tiwari, A. N., A. Romeo, D. Baetzner, and H. Zogg: Flexible CdTe solar cells on polymer films. Progress in Photovoltaics: Research and Applications, 9:211-215, 2001 flexible Solarzellen und insbesondere leichte und flexible CdTe-CdS-Solarzellen auf Polyimid.

Ein flexibler miniaturisierter Temperatursensor ist in dem Artikel Moser, Yves and Martin A. M. Gijs: Miniaturized flexible temperature sensor. Journal of Microelectromechanical Systems, 16(6):1349-1354, 2007, gezeigt. Der Sensor basiert auf einem Dünnfilmplatinwiderstand, der in eine Polyimidfolie eingebettet ist.

Ultradünne Chips werden auf einer Folie aufgebracht, um flexible elektronische Schaltkreise herzustellen. Beispielsweise zeigt Rempp, Horst, Joachim Burghartz, Christine Harendt, Nicoleta Pricopi, Marcus Pritschow, Christian Reuter, Harald Richter, Inge Schindler, and Martin Zimmermann: Ultra-thin chips on foil for flexible electronics. In IEEE International Conference on Solid-State Circuits, pages 334-617, 2008, die Verwendung von gedünnten Siliziumchips (in der Größenordnung von wenigen 10 µm), die auf eine Polyimidfolie montiert sind, um einen hohen Grad an Integration zu realisieren. Schließlich wurden auch bereits Elektrobenetzungssysteme (EWOD) auf Foliensubstraten vorgeschlagen (siehe beispielsweise Abdelgawad, Mohamed and Aaron R. Wheeler: Low-cost, rapid-prototyping of digital microfluidics devices. Microfluid Nanofluid, 4:349-355, 2008). Dieses System hat ein offenes Design, d. h. Flüssigkeitstropfen werden auf Foliensubstraten in Umgebungsluft bewegt.

All diesen bekannten flexiblen Schaltungsträgern ist aber gemeinsam, dass sie von ihrer Funktionalität her nur als eine in geringem Maße auslenkbare zweidimensionale Struktur betrachtet werden.

Die EP 1625437 A1 bezieht sich auf eine Elektrowetting-Vorrichtung mit einem abgedichteten Hohlraum, der eine Vielzahl von Fluidmengen enthält. Jede Fluidmenge ist im Wesentlichen nicht mit jeder angrenzenden Fluidmenge mischbar und der Hohlraum ist durch eine Innenfläche gebildet. Die gesamte Innenfläche ist in eine Vielzahl von benachbarten und zusammenhängenden Bereichen unterteilt. Jeder zusammenhängende Bereich entspricht einer entsprechenden Fluidmenge und ist in Kontakt mit ihr. Die Benetzbarkeit jedes Bereichs ist derart, dass jede Fluidmenge vorzugsweise eher an dem entsprechenden zusammenhängenden Bereich haftet als an einem der mit dem entsprechenden Bereich benachbarten zusammenhängenden Bereiche. Die Vorrichtung gemäß dieser Druckschrift wird beispielsweise als optisches Bauelement genutzt.

Die EP 2239600 A1 bezieht sich auf eine verformbare optische Linse. Die optische Linse weist eine Membran, ein Substrat für die Membran und ein Fluid auf, das zwischen der Membran und dem Substrat angeordnet ist, auf. Ein Aktuator deformiert die Membran. Der Aktuator umfasst eine erste Elektrode, die mit der Membran verbunden ist, und eine zweite Elektrode. Die zweite Elektrode ist oberhalb der Membran so angeordnet, dass sich die erste Elektrode zwischen dem Substrat und der zweiten Elektrode befindet. Dadurch kann die Linse von einer konvexen zu einer konkaven Gestalt deformiert werden. Weiterhin kann kein Fluid zwischen den Elektroden eingeschlossen sein, so dass keine Dickenvariation der Isolierschicht zwischen den Elektroden auftritt. Die zweite Elektrode kann weiterhin in Bereiche mit höherer und geringerer Leitfähigkeit unterteilt werden, so dass die Mitte der Linse in seitlicher Richtung bewegt werden kann, indem verschiedene Spannungen an die Segmente angelegt werden.

Die US 2006/044448 A1 offenbart ein optisches Element und eine Bildaufnahmevorrichtung. Das optische Element umfasst einen Behälter, der mindestens in einem Lichtpassagenbereich lichtdurchlässig ist, und ein lichtdurchlässiges Dispersionsmedium, das in dem Behälter enthalten ist. Ein lichtdurchlässiges Dispersoid (beispielsweise Nanopartikel) ist in dem Dispersionsmedium verteilt und hat einen Brechungsindex, der sich vom Brechungsindex des Dispersionsmediums unterscheidet. Ein Magnetfeldgenerator steuert die Brechung von Licht, die den Lichtpassagenbereich durchdringt, indem das Dispersoid durch elektromagnetische Kräfte bewegt wird.

Die US 2011/157711 A1 offenbart eine flüssige Linse mit einer Elektrode und einer isolierenden ersten Flüssigkeit sowie einer leitfähigen zweiten Flüssigkeit. Die beiden Flüssigkeiten sind nicht mischbar und haben unterschiedliche Brechungsindices. Die optischen Eigenschaften werden durch eine Änderung der Grenzflächenform zwischen der ersten und der zweiten Flüssigkeit verändert, indem eine Spannung an die Elektroden angelegt wird. Auf einer Oberfläche der Isolierscheibe, die quer zur Lichtstrahlrichtung verläuft, sind Bereiche mit unterschiedlicher Affinität für die beiden Flüssigkeiten angeordnet. Eine Elektrode ist auf der flüssigkeitsabgewandten Seite der Isolierscheibe angeordnet.

Die US 2006/044640 A1 offenbart eine optische Vorrichtung, eine Linseneinheit und eine Bildaufnahmevorrichtung. Die Linseneinheit weist einen Flüssigkeitsbehälter auf, die eine elektrisch isolierende und eine elektrisch leitfähige Flüssigkeit beinhaltet. Die Flüssigkeiten sind miteinander nicht mischbar, sind optisch transparent und haben unterschiedliche Brechungsindices. Die Linsenvorrichtung weist weiterhin ein Gas absorbierendes Material auf, das in dem oder um den Flüssigkeitsbehälter herum angeordnet ist. Das Gas absorbierende Material absorbiert Gase, die bei der Energetisierung erzeugt werden. Daher kann die Linseneinheit ihre optischen Eigenschaften auch aufrechterhalten, wenn die Spannung häufig angelegt wird.

Es besteht daher ein Bedürfnis nach einem optofluidischen Bauelement, das in hochintegrierter Form und in äußerst kompakter Geometrie ein robustes und hochfunktionelles optisches System bereitstellt.

Dabei basiert die vorliegende Erfindung auf der Idee, Elektroden und andere Aktuierungsstrukturen, die für optofluidische Bauteile benötigt werden, im Inneren eines fluidgefüllten Hohlraumes, der durch das Gehäuse des optofluidischen Bauelements gebildet ist, anzuordnen. Dadurch, dass der flexible Träger zunächst separat mit allen benötigten Strukturen und Bauteilen versehen wird und erst dann im Inneren des optofluidischen Bauelements montiert wird, können hochkomplexe Strukturen auf exakte Art und Weise an von außen schwer zugänglichen Bauteilregionen angebracht werden.

Mit dem erfindungsgemäßen Ansatz ist es möglich, hochfunktionelle optische Systeme innerhalb einer ultrakompakten Geometrie zu realisieren. Systeme mit mehr als nur einer abstimmbaren optischen Komponente können leicht erstellt werden. Damit kann die Integration einer Vielzahl von abstimmbaren Komponenten im Bedarfsfall einfach realisiert werden. Es sind keine bewegten mechanischen Teile erforderlich, so dass ein mechanischer Verschleiß als Ausfallursache wegfällt. Weiterhin ist keine komplexe Assemblierung mechanischer Teile nötig, wie dies momentan für mit Spulen aktuierte Linsenstapel erforderlich ist.

Die Verwendung eines hochintegrierten multifunktionalen flexiblen Trägers, der elektrische, mikrofluidische und optische Aufgaben erfüllen kann, bietet zum einen den Vorteil einer hohen Justiergenauigkeit der optischen Elemente, da die exzellenten Justiereigenschaften der lithografischen Strukturierung beim Positionieren der Strukturen auf dem Träger ausgenutzt werden können. Weiterhin ist die elektrische Kontaktierung und Ansteuerung der Flüssigkeiten beispielsweise auch die elektrofluidische Aktuierung z.B. für EWOD, DEP oder dergleichen leicht realisierbar.

Das erfindungsgemäße System ist kompatibel mit einer kostengünstigen Massenfertigung, bei der sowohl das Gehäuse als auch die flexible Trägerstruktur im Rahmen von Standardplanartechniken und Batchprozessen hergestellt werden können. Eine Automatisierung der Endmontage ist leicht möglich und die Justierung der Einzelkomponenten mit Bezug aufeinander wird nicht mehr bei der Assemblierung, sondern, wie bereits erwähnt, schon während der fotolithografischen Strukturierung des flexiblen Trägers durchgeführt.

Damit ist die Aufbau- und Verbindungstechnik des Gesamtsystems erfindungsgemäß besonders einfach: Die benötigten Flüssigkeiten können über eine automatisierte präzise Dosierung entsprechend zugeführt werden. Aufgrund entsprechender Oberflächenstrukturierung und/oder Beschichtung der den Fluiden zugewandten Oberfläche des flexiblen Trägers lässt sich erreichen, dass die Fluide beim Einfüllen von präzise dosierten Volumina selbständig die beabsichtigte geometrische Gestalt einnehmen.

Mit Hilfe des erfindungsgemäßen Ansatzes ist es auf besonders einfache Weise möglich, eine Vielzahl von optischen Formen zu realisieren: Kugelige Oberflächen (refraktiv und reflektiv), konkave, konvexe und nicht abstimmbare asphärische Linsen (in Form von Festkörperbauteilen) können leicht kombiniert werden. Weiterhin können auch die optischen Eigenschaften der Fluide bezüglich Brechungsindex, Dispersion, Transmissionsspektrum und dergleichen in einem weiten Rahmen gewählt werden. Abstimmbare und nicht abstimmbare Elemente können leicht miteinander kombiniert werden.

Im Folgenden wird mit dem Begriff "Steuereinheit" die Vielzahl von möglichen Aktuierungselementen bezeichnet, die zu einer Veränderung der optischen Eigenschaften der jeweiligen Fluidkomponenten führen. Dies umfasst beispielsweise Elektroden mit oder ohne Oberflächenmodifikationen, aber auch Mikrokanäle zum Zuführen und Abführen von Fluiden.

Gemäß einer vorteilhaften Ausführungsform umfasst der flexible Träger eine Folie, in der mindestens ein elektrisch leitendes Element vorgesehen ist. Dieses elektrisch leitende Element kann gegenüber der Fluidkomponente entweder elektrisch isoliert sein, oder aber offen und direkt mit dem Fluid in Kontakt sein. Eine elektrische Isolierung ist für all die Aktuierungsverfahren nötig, die über kapazitive oder induktive Wechselwirkung arbeiten, während eine offene Elektrode benötigt wird, wenn direkt ein Potenzial, beispielsweise Masse, an das Fluid angelegt werden soll.

Um verschiedenartige Strukturen in einer Folienstruktur zu realisieren, kann die flexible Folie mehrlagig mit einer Vielzahl von voneinander isolierten elektrisch leitenden Elementen, aber auch weiteren elektronischen Komponenten ausgeführt sein. Beispielsweise können auch aktive und passive elektronische Bauteile wie Widerstände, Kondensatoren, Spulen aber auch LEDs und Steuerelektronik sowie strahlungsdetektierende Bauteile in der Folie selbst integriert sein. Die flexible Trägerstruktur kann außerdem auch Heizelemente enthalten, die elektrisch ansteuerbar sind.

Erfindungsgemäß bildet das Gehäuse des optofluidischen Bauelements einen Hohlraum aus, der zum Führen der Strahlung mit mindestens einer Fluidkomponente gefüllt ist, und das Gehäuse kann in vorteilhafter Weise eine rohrförmige Gestalt haben. Der darin gebildete Hohlraum kann jeden geeigneten Querschnitt aufweisen, z.B. kreisförmig, polygonal oder elliptisch. Zum Montieren des flexiblen Trägers an der Innenseite der den Hohlraum begrenzenden Wandung ist es am einfachsten, wenn das Gehäuse eine kreiszylindrische Gestalt hat, da auf diese Weise die Folie besonders leicht an den Innenquerschnitt des Hohlraums anzupassen ist.

Gemäß einer weiteren vorteilhaften Ausgestaltung des erfindungsgemäßen optofluidischen Bauelements kann die Wandung des Hohlraums zumindest teilweise flexibel ausgestaltet sein, so dass zusätzlich durch einen an dem optofluidischen Bauelement angebrachten Gehäuseaktuator diese Wandung auslenkbar ist. Durch das Anbringen von beispielsweise pneumatischen Aktuatoren an der Außenseite einer flexiblen Gehäusestruktur kann das rohrförmige Gehäuse aus der ursprünglichen optischen Achse wegbewegt werden, so dass beispielsweise die Fähigkeit erreicht werden kann, Licht außerhalb der optischen Hauptachse zu senden und/oder zu empfangen.

Bei der erfindungsgemäßen optofluidischen Struktur können je nach Bedarf durch Einbringen transparenter Bereiche strahlungsdurchlässige Fenster vorgesehen werden. Zum Schutz gegen unerwünschtes Streulicht kann aber selbstverständlich das Gehäuse und damit die Wandung des Hohlraums auch opak ausgeführt sein. Aufbau- und verbindungstechnisch lässt sich das erfindungsgemäße optofluidische Bauelement besonders einfach realisieren, wenn eine optische Achse des Bauelements mit der longitudinalen Symmetrieachse des Hohlraums zusammenfällt. Im einfachsten Fall wird das Gehäuse des optofluidischen Bauelements durch einen rotationssymmetrischen Hohlzylinder gebildet.

Sowohl zum Befüllen des Bauteils mit den benötigten Fluiden als auch für die eigentliche optische Funktionalität kann auf besonders einfache Weise eine dem Fluid zugewandte geometrische Oberflächenstruktur und/oder Oberflächenbeschichtung dadurch präsentiert werden, dass sie auf der Oberfläche des flexiblen Trägers vorgesehen ist.

Je nach Anwendungsfall kann auf einfache Weise bei dem optofluidischen Bauelement gemäß der vorliegenden Erfindung ein lichtemittierendes oder lichtempfangendes optisches Bauelement an einer Außenseite der den Hohlraum begrenzenden Wandung angeordnet sein. Beispielsweise kann an einer der Stirnseiten eines hohlzylindrischen Gehäuses ein CMOS-Fotoelement oder jede andere Art von Licht empfangendem Bauteil angeordnet sein.

Um beispielsweise einen Flüssig-Flüssig-Spiegel zu realisieren, kann in vorteilhafter Weise der Hohlraum in zwei Kompartimente aufgeteilt sein, die jeweils ein mit dem anderen Fluid nicht mischbares Fluid mit unterschiedlichen optischen Eigenschaften beinhalten. Gemäß einer weiteren vorteilhaften Ausbildung der vorliegenden Erfindung ist mindestens ein Optikaktuator zum Steuern der optischen Eigenschaften der mindestens einen Fluidkomponente an dem flexiblen Träger angeordnet. Damit kann eine besonders präzise Fertigung in einem Planar-Batchprozess erreicht werden und der Aktuator wird zusammen mit dem flexiblen Träger in das Gehäuse eingefügt.

Wie bereits ausgeführt, kann der mindestens eine Optikaktuator durch eine Vielzahl von Komponenten realisiert werden, beispielsweise eine Elektrodenanordnung zum Aktuieren der mindestens einen Fluidkomponente mittels direkter Elektrobenetzung, mittels des Electrowetting-on-Dielectrics (EWOD), einer Dielektrophorese und/oder einer Heizstruktur zum Aktuieren der Fluidkomponente mittels Thermokapillarkräften.

Weiterhin kann das optofluidische Bauelement gemäß der vorliegenden Erfindung auch eine Pumpenstruktur zum hydraulischen oder pneumatischen Aktuieren der mindestens einen Fluidkomponente enthalten. Durch Einpumpen kann beispielsweise eine gefärbte Fluidkomponente in den Strahlengang eingefügt und auch wieder entfernt werden, um eine Irisblende zu realisieren. Pumpenvorgänge lassen sich aber auch dazu verwenden, um Grenzflächen zwischen zwei Fluiden zu verschieben oder um gezielt Fluide gegen solche mit anderen optischen Eigenschaften auszutauschen.

Um eine möglichst einfache Herstellbarkeit zu gewährleisen, werden gemäß der vorliegenden Erfindung das Gehäuse des optofluidischen Bauelements mit seinem Hohlraum und der flexible Träger der Steuereinheit als separate Bauteile hergestellt und anschließend zusammengefügt. Auf besonders effiziente Weise geschieht diese Montage, indem der flexible Träger in den Hohlraum eingeschoben wird und dann an der den Hohlraum begrenzenden Wandung mittels einer Klebung, einer Schweißung und/oder eines Formschlusses fixiert wird.

Um Strahlung in das optofluidische Bauelement einzuspeisen und aus ihm wieder auszukoppeln, können im Strahlungseintritts- und/oder Strahlungsaustrittsbereich Linsenstrukturen oder optische Fenster vorgesehen sein, die auch dafür eingerichtet sind, den Hohlraum fluiddicht zu versiegeln. Auf besonders einfache Weise lässt sich dies bei einem rohrförmigen Gehäuse realisieren, bei dem an den beiden Stirnseiten jeweils entsprechende Linsen und/oder Halterungen für Lichtleitfasern angebracht werden.

Zum besseren Verständnis der vorliegenden Erfindung wird diese anhand der in den nachfolgenden Figuren dargestellten Ausführungsbeispiele näher erläutert. Dabei werden gleiche Teile mit gleichen Bezugszeichen und gleichen Bauteilbezeichnungen versehen. Weiterhin können auch einzelne Merkmale oder Merkmalskombinationen aus den gezeigten und beschriebenen Ausführungsformen für sich genommen eigenständige erfinderische oder erfindungsgemäße Lösungen darstellen.

### Es zeigen:

- **Fig. 1**: eine schematische Längsschnittdarstellung eines optofluidischen Bauelements gemäß einer ersten Ausführungsform in zwei Betriebszuständen;
- **Fig. 2**: einen Querschnitt durch das optofluidische Bauelement gemäß Fig. 1;
- **Fig. 3**: ein Detail des optofluidischen Bauelements der Fig. 1;
- **Fig. 4**: eine Querschnittsdarstellung des Details aus Fig. 3;
- **Fig. 5**: eine schematische Längsschnittdarstellung eines rotierenden Prismas;
- **Fig. 6**: einen Querschnitt durch das Prisma der Fig. 5;
- **Fig. 7**: eine schematische Darstellung einer abstimmbaren Flüssigapertur;
- **Fig. 8**: eine schematische Längsschnittdarstellung einer weiteren Ausführungsform einer abstimmbaren Flüssigapertur;
- **Fig. 9**: einen Querschnitt durch die Anordnung aus Fig. 7;
- **Fig. 10**: eine schematische Darstellung einer abstimmbaren Flüssiglinse;
- **Fig. 11**: eine schematische Darstellung einer weiteren abstimmbaren Linse;
- **Fig. 12**: einen Schnitt durch die Anordnung der Fig. 10;
- **Fig. 13**: eine schematische Darstellung eines abstimmbaren Flüssigspiegels;
- **Fig. 14**: einen Querschnitt durch die Anordnung aus Fig. 13;
- **Fig. 15**: eine Darstellung eines abstimmbaren optischen Filters in einem ersten und einem zweiten Betriebszustand;
- **Fig. 16**: eine Schnittdarstellung durch die Anordnung aus Fig. 15;
- **Fig. 17**: ein Beispiel für eine Gesamtanordnung eines optofluidischen Bauelements mit abstimmbarer Flüssigapertur;
- **Fig. 18**: eine Darstellung eines vollständigen optofluidischen Bauelements mit einem EWOD-Flüssigprisma;
- **Fig. 19**: eine Darstellung eines vollständigen optofluidischen Bauelements mit einem EWOD-Flüssigspiegel;
- **Fig. 20**: eine schematische Darstellung eines teleskopischen Abbildungssystems;
- **Fig. 21**: eine schematische Darstellung eines optischen Kohärenztomografie- und Mikroskopiesystems;
- **Fig. 22**: eine schematische Darstellung eines teleskopischen Abbildungssystems mit von außen angebrachten mechanischen Aktoren;
- **Fig. 23**: einen Schnitt durch die Anordnung aus Fig. 22.

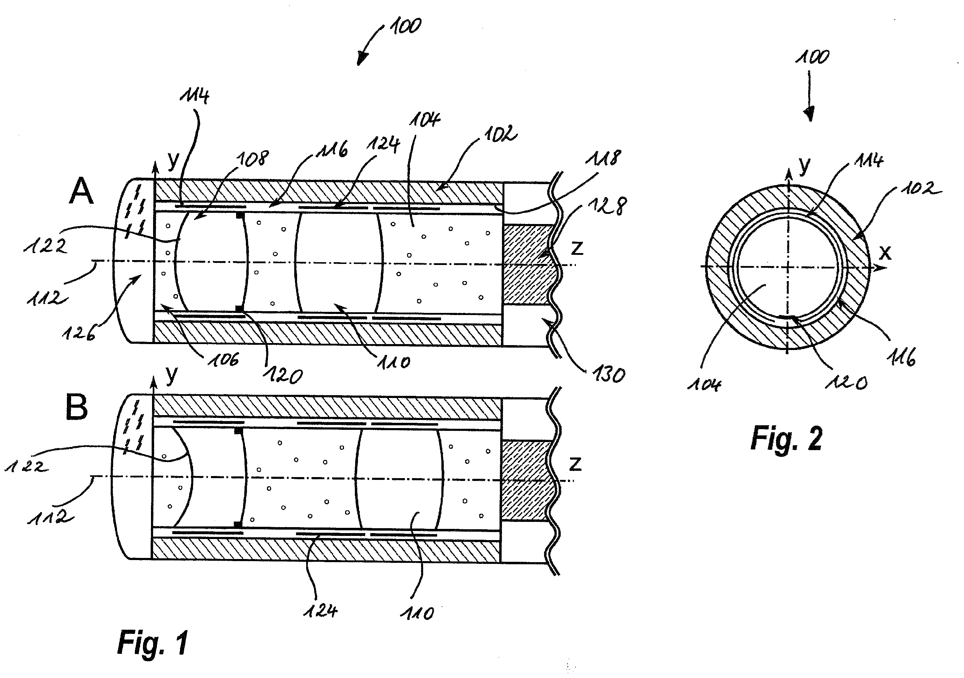

Fig. 1 zeigt ein optofluidisches Bauelement 100 gemäß einer ersten Ausführungsform der vorliegenden Erfindung. Dabei zeigen die Fig. 1A und 1B zwei unterschiedliche Betriebszustände des optofluidischen Bauelements 100. Der mechanische Aufbau soll zunächst mit Bezug auf die Fig. 1A erläutert werden. Das optofluidische Bauelement 100 umfasst ein Gehäuse 102, das beispielsweise aus Kunststoff hergestellt sein kann und wie aus Fig. 2 ersichtlich ist, beispielsweise einen kreisförmigen Durchmesser haben kann.

Selbstverständlich sind aber auch andere Raumformen, wie beispielsweise polygonale oder elliptische Querschnitte ebenfalls möglich.

Im Inneren des Gehäuses 102 ist ein Hohlraum 104 ausgebildet, der zum Führen elektromagnetischer Strahlung, insbesondere zur Führung von sichtbarem Licht, Laserlicht oder Infrarotstrahlung, geeignet ist. Gemäß der vorliegenden Erfindung sind in dem Hohlraum Fluidkomponenten enthalten, deren optische Eigenschaften sich gezielt steuern lassen. Im speziellen Fall sind dies verschiedene nicht mischbare Flüssigkeiten, die, wie dies später noch erläutert werden wird, Linsen mit steuerbarer Form ausbilden. Wie in Fig. 1A gezeigt, ist in einer ersten Flüssigkeit 106 in zwei Regionen jeweils eine zweite und eine dritte Flüssigkeit 108, 110 eingebettet. Beispielsweise kann die erste Flüssigkeit ein Öl sein, während die zweite Flüssigkeit 108 und die dritte Flüssigkeit 110 eine damit nicht mischbare Flüssigkeit wie beispielsweise Wasser, sein kann. Die Prinzipien der vorliegenden Erfindung lassen sich aber auch auf andere Flüssigkeiten und auch auf Gase anwenden.

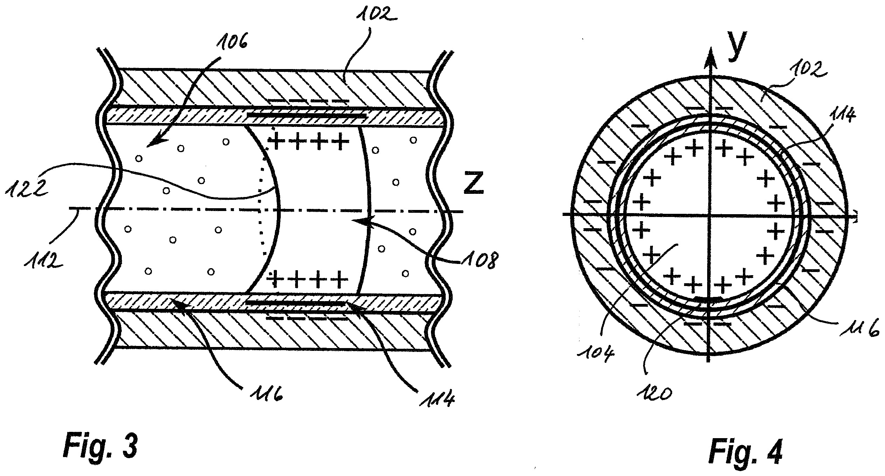

Die beiden Flüssigkeitskompartimente 108 und 110 bilden Linsen mit einer gemeinsamen optischen Achse 112, die gleichzeitig auch die Mittelachse des Hohlraums 104 ist, aus. Zum Ansteuern der optischen Eigenschaften dieser beiden Linsen wird erfindungsgemäß der Meniskus der Grenzfläche zwischen der ersten Flüssigkeit 106 und der zweiten Flüssigkeit 108 durch Elektrobenetzung verändert. Hierfür ist eine erste Elektrodenanordnung 114 vorgesehen. Wie dies später noch mit Bezug auf Fig. 3 und 4 erläutert wird, kann über die Ansteuerung der Elektrodenanordnung 114 eine durch die Flüssigkeit 108 gebildete Linse verformt werden. So kann aus der in Fig. 1A gezeigten konkaven Dispersionslinse im aktuierten Zustand (Fig. 1B) eine konvexe Linse geschaffen werden.

Um den hohen Kontaktwinkel der wässrigen Phase zu gewährleisten, ist die dem Fluid zugewandte Oberfläche hydrophob beschichtet.

Der Grundgedanke der vorliegenden Erfindung besteht nun darin, die Steuereigenschaften der Elektrode 114 und einer geeigneten Oberflächenbeschichtung in Form eines flexiblen Trägers 116 zu realisieren. Erfindungsgemäß wird der flexible Träger 116 an der Innenwandung 118 des Hohlraums 104 angebracht. Der flexible Träger 116 kann beispielsweise durch eine Polyimidfolie mit eingebetteten Elektrodenstrukturen 114 gebildet sein. Um die Flüssigkeit auf ein definiertes Potenzial zu legen, ist außerdem eine offene Elektrode 120 an der Oberfläche der Folie 116 aufgebracht. Durch Anlegen einer Spannung an die ringförmige Elektrode 114 im Inneren der Folie 116 kann daher die Flüssig-Flüssig-Grenzfläche 122 in ihrer Krümmung verändert werden.

Aufgrund einer hydrophoben Beschichtung auf der Oberfläche der Folie 116 wird ein hoher Kontaktwinkel der wässrigen Phase im unbetätigten Zustand (Fig. 1A) erzeugt und daher eine konkave Linsenfläche generiert. Wird die Spannung an der Ringelektrode 114 erhöht, ändert sich nach den Prinzipien der Elektrobenetzung der Kontaktwinkel und die Krümmung der Flüssig-Flüssig-Grenzfläche 122 kann verändert werden, bis sie beispielsweise die in Fig. 1B gezeigte Form hat.

Unterschiedliche Krümmungsradien können durch unterschiedliche Spannungswerte an der Elektrode 114 erreicht werden. Die erforderlichen Zuleitungen zu einer in dieser Figur nicht dargestellten Spannungsversorgung können ebenfalls in dem flexiblen Träger 116 realisiert werden.

Für die Befestigung des flexiblen Trägers 116 an der Innenwandung 118 des Gehäuses 102 können alle geeigneten Verfahren verwendet werden. Beispielsweise können Klebungen oder Plasmabonding ebenso wie Ultraschall- und Laserschweißen eingesetzt werden, je nach Ausgestaltung des Gehäuses 102. Weiterhin können auch formschlüssige Befestigungsmechanismen bei geeigneter Ausformung des Gehäuses verwendet werden.

Das optofluidische Bauelement 100 der Fig. 1 enthält noch eine weitere Ausführungsform einer abstimmbaren Linse in Form der dritten Flüssigkeit 110, die über eine zweite Elektrodenanordnung 124 angesteuert wird.

Durch unterschiedliche Spannungsbeaufschlagung der beiden Ringelektroden 124 kann die Benetzbarkeit der Folienoberfläche so verändert werden, dass die Flüssigkeit 110 ihre Position entlang der optischen Achse 112 verändert. Dadurch wird auch die Brennweite des Gesamtsystems verändert und auf diese Weise eine Zoomfunktion ermöglicht.

Die in den Fig. 1 und 2 dargestellte Anordnung besitzt außerdem eine feste Glas- oder Kunststofflinse 126, die beispielsweise auch asphärische Eigenschaften haben kann. Das optofluidische Bauelement 100 ist, wie in Fig. 1 gezeigt, speziell geeignet für eine teleskopische Bilderzeugung wie z.B. als endoskopische Sonde (Durchmesser geringer als 5 mm). Das durch die feste Linse 126 eintretende Licht kann am gegenüberliegenden Ende des optofluidischen Bauelements 100 durch eine entsprechende Glasfaser 128 oder einen anderen Lichtleiter ausgekoppelt werden. Der Lichtleiter ist dabei in einem optischen Fenster 130, das mit dem Gehäuse 102 verbunden ist, eingebettet. Alternativ kann aber auch an dem optischen Fenster 130 ein Bildsensor wie z.B. ein CCD (Charge-coupled Device)-Sensor oder ein CMOS-Sensor angeordnet sein.

Gemäß der vorliegenden Erfindung werden zur Herstellung des optofluidischen Bauelements das Gehäuse 102 und der flexible Träger 116 getrennt voneinander hergestellt. Dabei wird der Träger in einem zweidimensionalen hochpräzisen fotolithografischen Prozess mit den entsprechenden Elektrodenstrukturen hergestellt. Darüber hinaus können an der der Flüssigkeit zugewandten Seite geometrische Strukturen ebenso wie chemische Beschichtungen aufgebracht werden. Nachdem die zweidimensionale Folie entsprechend mit fluidischer und elektrischer Funktionalität ausgestattet ist, wird sie gerollt und in den Hohlraum 104 des Gehäuses 102 eingeführt. Die Fixierung erfolgt beispielsweise über eine Klebung. Die verschiedenen Flüssigkeitsvolumina werden über einen Mikrodosierer in hier insgesamt fünf Dosierschritten eingefüllt. Anschließend wird das System versiegelt, indem die Linse 126 und das optische Fenster 130 angebracht werden. Elektrische Kontakte zum Ansteuern der Elektrodenstrukturen 114, 124 und 120 werden auf geeignete Weise nach außen geführt.

Mit Bezug auf die Fig. 3 und 4 wird nachfolgend das Konzept der Elektrobenetzung im Detail erläutert. Dabei stellt die Fig. 3 ein Detail aus der Anordnung der Fig. 1 dar, nämlich die durch das zweite Flüssigkeitskompartiment 108 gebildete abstimmbare Linse. Das Grundprinzip der Elektrobenetzung (engl. "electro wetting") basiert auf dem physikalischen Phänomen, dass ein elektrisches Feld durch Veränderung der Oberflächenspannung einer Flüssigkeit bewirkt, dass die Flüssigkeit einen Gegenstand stärker benetzt, also der Kontaktwinkel geringer wird. Ohne ein elektrisches Feld nimmt die Grenzfläche 122 die gestrichelt eingezeichnete Lage ein, da die Innenfläche der Folie 116 zumindest oberhalb der Ringelektrode 114 hydrophob beschichtet ist und daher die erste Flüssigkeit 106, die eine hydrophobe Flüssigkeit ist, sich bevorzugt an den Elektrodenbereich anlegt. Wird dagegen ein elektrisches Feld an die Elektrode 114 angelegt, wie dies in Fig. 3 und 4 symbolisch durch die Ladungen dargestellt ist, verdrängt das Wasser zunehmend den Ölfilm, da das anliegende Feld die Polarisation der Dipole in der Wasseroberfläche aufhebt. Daher nimmt die Flüssig-Flüssig-Grenzfläche den in Fig. 3 durchgezogen dargestellten Verlauf an. Gemäß der vorliegenden Erfindung hat der flexible Träger 116 mehrere Aufgaben. Zum einen sind elektrische Strukturen und Oberflächenmodifikationen für die eigentliche Aktuierung der optofluidischen Komponenten notwendig, zum anderen ist eine besonders präzise Dosierung der verwendeten Flüssigkeiten für das fehlerfreie Funktionieren des Bauteils unerlässlich.

Hier wird beispielsweise mit präzisen Dosierpumpen gearbeitet, alternativ oder zusätzlich kann auch an der Oberfläche des flexiblen Trägers 116 eine Strukturierung vorgesehen sein, welche die Selbstjustierung von Flüssigkeiten beim Einströmen ermöglicht. Zum Beispiel können mikrofluidische Benetzungsmuster auf der flexiblen Folie in Form von stark hydrophoben Regionen auf einem hydrophilen Substrat oder in Form von sogenannten Pinning-Barrieren und Phaseguide-Strukturen vorgesehen sein. Beispielsweise können scharfe Knickstellen oder Stufen in der Substrattopografie als Pinning-Barrieren verwendet werden. Auf diese Weise werden die Oberflächen der Flüssigkeiten gezwungen, bestimmte gewünschte Formen einzunehmen. Indem verschiedene Flüssigkeitspositionen durch lithografisch strukturierte mikrofluidische Benetzungsmuster und Pinning-Barrieren auf der aktiven flexiblen Folie definiert werden, kann eine hochgenaue Positionierung der zahlreichen optischen Komponenten innerhalb der fertiggestellten optofluidischen Struktur erzielt werden. Auf diese Weise können abstimmbare optische Systeme mit Durchmessern im Millimeterbereich hergestellt werden, die eine große Beständigkeit gegen mechanischen Schock haben, da die Oberflächenkräfte stärker sind als die Inertialkräfte. Komplexe dreidimensionale abstimmbare optische Systeme können daher ohne mechanisch bewegte Teile realisiert werden.

Beispiele für die Realisierung geeigneter topografischer Strukturen mit Pinning-Barrieren und Variationen der lokalen Benetzbarkeit werden nachfolgend gegeben. Um die Oberflächeneigenschaften der flexiblen Folie zu beeinflussen, kann z.B. das Fluoropolymer Cytop verwendet werden, um stark hydrophobe Regionen herzustellen. Eine dünne Ordylschicht oder ein fotostrukturierbares PDMS kann verwendet werden, um flexible Knicke zu erstellen, die als Pinning-Strukturen fungieren. Um diese Filme mit guter Haftung auf einen flexiblen Polyimidträger zu fixieren, kann ein Haftvermittler verwendet werden. Beispielsweise können mittels plasmaverstärkter chemischer Dampfabscheidung (PECVD) Siliziumkarbid und Siliziumdioxidschichten abgeschieden werden, die als dünne flexible Haftvermittler dienen. Die Siliziumdioxidschicht stellt eine geeignete Oberfläche für die Abscheidung von Cytop, Ordyl oder PDMS ab und zeigt darüber hinaus hydrophilen Charakter, was nützlich ist, um verschiedene Flüssigkeitspositionierungsgebiete mit Hilfe von veränderlicher Benetzbarkeit zu definieren.

Die so hergestellten flexiblen Träger (insbesondere Polyimidfolien) werden anschließend in das Gehäuse eingeführt, um den Hohlraum 104 auszukleiden. Dies kann beispielsweise mit Hilfe eines geeigneten Werkzeugs zum Aufrollen und Einführen der Folie geschehen. Mit dem Werkzeug wird zum einen die Folie mechanisch gestützt, zum anderen wird die Justierung und Befestigung an der inneren Oberfläche des Hohlraums damit bewerkstelligt. Beispielsweise kann ein Vakuumwerkzeug verwendet werden, bei dem durch Änderung des Druckes von negativen zu positiven Werten die Folie gegen die Hohlraumwandung gepresst wird. Um eine permanente Fixierung der Folie an der Innenwandung zu erzielen, können geringe Mengen eines Klebers verwendet werden.

Generell sollte, um eine möglichst präzise Einstellung der optofluidischen Elemente innerhalb des Hohlraums sicherzustellen, ein automatisiertes Dosiersystem verwendet werden, bei dem eine Kanüle in den Hohlraum eingeführt wird, ohne die darin bereits angeordnete flexible Folie zu beschädigen und anschließend kleine Volumina der jeweils benötigten Flüssigkeit einzufüllen.

Neben der Realisierung der Elektrodenstrukturen für die Elektrobenetzung (EWOD) sind auch die Metallisierungen für Anschlüsse und Verdrahtung in der Polyimidfolie eingebettet. Um einen höheren Freiheitsgrad beim Design zu erreichen, können auch Mehrlagenverdrahtungen verwendet werden. Für einen Fachmann ist selbstverständlich klar, dass jede Art von flexiblem Träger, wie beispielsweise keramische Träger oder andere Kunststoffe für die vorliegende Erfindung eingesetzt werden können. Im Folgenden wird jedoch in der Regel von einer Polyimidträgerfolie ausgegangen.

In einem ersten Schritt werden Polyimidfolien mit den benötigten EWOD-Aktuatoren hergestellt und verschiedene dielektrische Schichten werden auf der Elektrode vorgesehen. Beispielsweise kann eine Kombination von Parylen C mit Cytop, Parylen HT (was bereits selbst hydrophob ist), Polyimid mit Cytop und beispielsweise Polyimid in Kombination mit Parylen HT, oder Siliziumdioxid mit Parylen und Cytop verwendet werden.

Für den elektrischen Anschluss der elektrisch funktionellen flexiblen Folie können beispielsweise miniaturisierte ultraflache Bandkabel mit direktem Zugang zur Folie eingesetzt werden. Damit können die elektrischen Verbindungen und Anschlüsse in einem Prozess mit der Folie selbst hergestellt werden und es besteht keine Notwendigkeit auf die aktive Folie zu bonden.

Mit Bezug auf die Fig. 5 bis 16 werden nachfolgend einige optofluidische Einzelkomponenten beschrieben, die nach Bedarf allein oder in beliebiger Kombination zum Erstellen eines optofluidischen Bauelements nach der vorliegenden Erfindung verwendet werden können.

Die Fig. 5 und 6 zeigen ein optofluidisches Prisma mit auslenkbarer Strahlführung des ausgelenkten Strahls. Die Flüssig-Flüssig-Grenzfläche 122 zwischen zwei nicht mischbaren Fluiden 106, 108 ist hier so geformt, dass sie eine glatte Begrenzung ausbildet und durch den Brechungsindexwechsel von der zweiten in die erste Flüssigkeit wird der Lichtstrahl 132 wie beim Eintritt in ein Prisma von der ursprünglichen optischen Achse 112 abgeknickt. Durch entsprechend ausgestaltete Ringelektroden 134 kann die Position des austretenden Lichtstrahls 132 um die Mittelachse herum rotiert werden. Die schräge Lage der Flüssig-Flüssig-Grenzfläche 122 wird im nicht aktuierten Zustand durch entsprechende Pinning-Barrieren definiert.

Die flexible Folie beinhaltet als Ansteuereinheit für dieses abstimmbare Prisma radial segmentierte Elektroden 134, wie dies aus Fig. 6 erkennbar ist. Die wässrige Phase kann dadurch schrittweise um 360° gedreht werden. Indem die geeignete Spannung an die Elektroden angelegt wird, kann ein vollständig ebener Meniskus erzeugt werden, so dass die Grenzfläche 122 als Prisma fungieren kann. Das heißt, die Elektrobenetzung steuert sowohl die Form des Grenzflächenwinkels wie auch die Rotation der ausgekoppelten optischen Achse.

Für eine hohe optische Effizienz müssen die gewählten Flüssigkeiten einen ausreichend großen Unterschied im Brechungsindex aufweisen. Eine mögliche Materialkombination wäre 1-Chlornaphthalin (n=1,63) und Wasser.

Die Fig. 7 bis 9 zeigen als weiteres optofluidisches Bauelement eine abstimmbare Iris, die nachfolgend auch als abstimmbare Apertur bezeichnet wird. Diese abstimmbare Apertur wird dadurch realisiert, dass in den Strahlengang ein ringförmiger Bereich aus opakem Material 136 eingeführt wird. Um den Öffnungsdurchmesser der Apertur zu vergrößern, befindet sich die Grenze zwischen dem ersten Fluid und dem opaken Material näher am Außendurchmesser, während sie näher an der optischen Achse befindlich ist, wenn die Apertur weiter geschlossen ist. Für die Aktuierung einer solchen optofluidischen Apertur gibt es unterschiedliche Möglichkeiten. Beispielsweise kann ein Ab- und Zuführkanal 138 vorgesehen sein, der ein über Pumpen gesteuertes Injizieren und Abpumpen des opaken Materials in die erste Flüssigkeit 106 ermöglich. Eine entsprechende Elektrodenstruktur 140 kann mit Hilfe von Kapillarkräften das Einsaugen und Ausstoßen des opaken Flüssigkeitstropfens 136 aktuieren. Alternativ kann, wie in Fig. 8 gezeigt, ein unverändertes Volumen an opaker Flüssigkeit 126 durch entsprechendes Aktuieren einer zweiten Elektrode 140 auf einen größeren Flächenbereich verteilt werden, so dass wiederum in der Durchsicht die Apertur weiter geöffnet ist.

Fig. 9 zeigt einen Schnitt durch die Anordnung der Fig. 7.

Die beiden Linsenstrukturen, die mit Bezug aus Fig.1 erläutert wurden, sind der Vollständigkeit halber in Fig. 10 bis 12 als Einzelmodule nochmals gezeigt.

Die Fig. 13 und 14 zeigen die Anordnung der Fig. 5 für einen Betriebsmodus, bei dem der einfallende Lichtstrahl aus dem Medium mit der höheren Brechzahl kommt. In diesem Fall fungiert die Flüssig-Flüssig-Grenzfläche 122 als total reflektierende Grenzfläche und der einfallende Lichtstrahl wird entsprechend den Gesetzen der Totalreflexion in Richtung der Wandung des Gehäuses abgelenkt. Damit ist ein Spiegel realisiert. Durch entsprechende Ansteuerung der Elektroden 134 kann die Grenzfläche 122 rotiert werden und damit die Position des auftretenden Lichtstrahls eingestellt werden.

Damit der Lichtstrahl nach außen treten kann, muss selbstverständlich in dem Austrittsbereich eine ausreichende Transparenz des Gehäuses vorhanden sein und insbesondere die Metallisierung der Elektrode 134 unterbrochen sein, wie dies in Fig. 12 erkennbar ist. Der so realisierte sogenannte TIR (Total Internal Reflection) Spiegel lässt sich wiederum vorteilhaft mit einer Kombination aus 1-Chlornaphthalin und Wasser realisieren, wobei, wie bereits erwähnt, die Wellenlänge des Lichts in Einklang mit der Transparenz der Folie und aller zu durchdringenden Materialien gebracht werden muss.

Die Fig. 15 und 16 erläutern ein alternatives Konzept zum Bewegen der Flüssigkeitsfronten. Gemäß dieser alternativen Ausführungsform sind Kanäle 138 vorgesehen, mit denen der Druck der jeweils mit dem Kanal verbundenen Flüssigkeit veränderbar ist. Wie in Fig. 15A dargestellt, kann damit die Grenzfläche 122 verschoben werden oder aber, wie in Fig. 15B dargestellt, ein Austausch des Mediums 108 vorgenommen werden. Beide Strukturen der Fig. 15 realisieren Filterstrukturen. Zum einen ist, wie in Fig. 15A gezeigt, die Länge der gesamte Wegstrecke, die der Lichtstrahl entlang der optischen Achse 112 durch das Medium 108 zurücklegt, steuerbar und damit eine Filterwirkung erzielbar. Alternativ ist, wie in Fig. 15B gezeigt, die gesamte Flüssigkeit 108 austauschbar, so dass eine Flüssigkeit mit unterschiedlichen Absorptionseigenschaften eingefüllt werden kann.

Nachfolgend sollen einige kombinierte Anordnungen eines optofluidischen Bauelements 100 unter Verwendung der in den Fig. 5 bis 16 beschriebenen Module beschrieben werden.

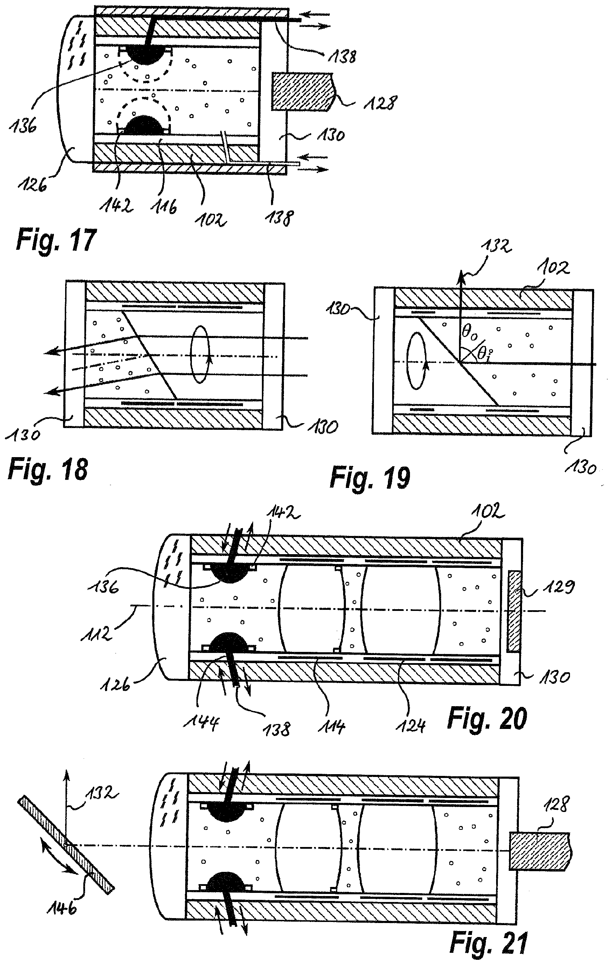

Fig. 17 zeigt ein Beispiel eines optofluidischen Bauelements, das als Sonde mit variabler Apertur ausgebildet ist. Das Funktionsprinzip der variablen Apertur entspricht dem Prinzip der Fig. 7, wobei nur ein Kanal für das Zu- und Abführen des opaken Materials 136 vorgesehen ist. Der Hohlraum 104 ist mit einer ersten Flüssigkeit 106 gefüllt, die ebenfalls über einen Kanal 138 zu- und abführbar ist. Die Position des opaken Materials 136 wird durch entsprechend strukturierte Pinning-Barrieren 142 definiert. Eine feste asphärische Linse 126 bündelt entsprechend das eintretende Licht. An der gegenüberliegenden Stirnseite des Gehäuses 102 ist der Lichtleiter 128 angebracht, der zu einer Bilderfassungseinheit führt. Gemäß dieser Ausführungsform beinhaltet die Folie 116 nur die Oberflächenstruktur 142 und Eintrittsöffnungen für die Kanäle 138, aber keine Elektroden.

Die Fig. 18 und 19 illustrieren, wie ein optofluidisches Prisma bzw. ein optofluidischer TIR-Spiegel gehäust werden könnten. Jede der beiden Stirnseiten des Gehäuses 102 ist dabei mit einem optischen Fenster 130 versiegelt. Zusätzlich ist im Fall der Ablenkung gemäß der Fig. 19 auch das Gehäuse 102 wenigstens in dem Bereich, in dem auch die Elektroden geöffnet sind, für den Lichtstrahl 132 transparent.

Fig. 20 zeigt eine weitere Ausführungsform eines komplexen optofluidischen Bauelements mit teleskopischer Linsenanordnung und einer steuerbaren Apertur. Eine solche Anordnung könnte z.B. in einer endoskopischen Sonde verwendet werden. In dieser speziellen Ausführungsform hat das Gehäuse 102 wiederum eine hohlzylindrische Gestalt und der Querschnitt ist kreisförmig. Entlang der optischen Achse erstreckt sich zunächst die Apertur entsprechend der bereits in Fig. 7 erläuterten Ausgestaltung. Anschließend folgt eine abstimmbare Linse, wie sie in Fig. 10 dargestellt ist und schließlich eine Linse mit verschieblichem Fokus, wie sie mit Bezug auf Fig. 11 erläutert wurde.

Die flexible Trägerfolie 116 beinhaltet bei dieser Ausführungsform neben Pinning-Barrieren 142 und Durchtrittsöffnungen 144 für die Kanäle 138 auch die Elektrodenstrukturen 114 und 124. Die beiden Stirnseiten des Gehäuses 102 sind einerseits mit einer festbrennweitigen Linse 126 und andererseits mit einem optischen Fenster 130 verschlossen. In dem optischen Fenster ist ein Bildsensor 129 aufgenommen, der beispielsweise ein CCD-Sensor oder ein CMOS-Sensor sein kann.

Die bezüglich der Fig. 1 bereits gegebenen Erläuterungen bezüglich der Herstellung des optofluidischen Bauelements treffen auch bei beiden Anordnungen nach Fig. 20 zu, mit der Ausnahme, dass zusätzlich als sechstes Fluid die opake Flüssigkeit 136 ebenfalls zugeführt werden muss.

Fig. 21 zeigt den Betrieb der Anordnung nach Fig. 20 beim Einstrahlen einer Beleuchtung in den zu beobachtenden Bereich: Eine Lichtleitfaser 128 koppelt den Lichtstrahl 132 in das System ein und ein weiterer Spiegel, der für einen Scanningbetrieb auch beweglich sein kann, positioniert die Strahlung in dem Zielbereich. Das aufgenommene Bild wird in derselben Art und Weise wie in Fig. 20 beschrieben, zurück in die Lichtleitfaser 128 gekoppelt. Auf diese Weise ist mit dem System der Fig. 21 ein System geschaffen, das für optische Kohärenztomografie und Mikroskopie geeignet ist. Der Mikrospiegel 146 kann nach Belieben realisiert werden und selbstverständlich auch durch ein Bauteil nach Fig. 19 realisiert werden.

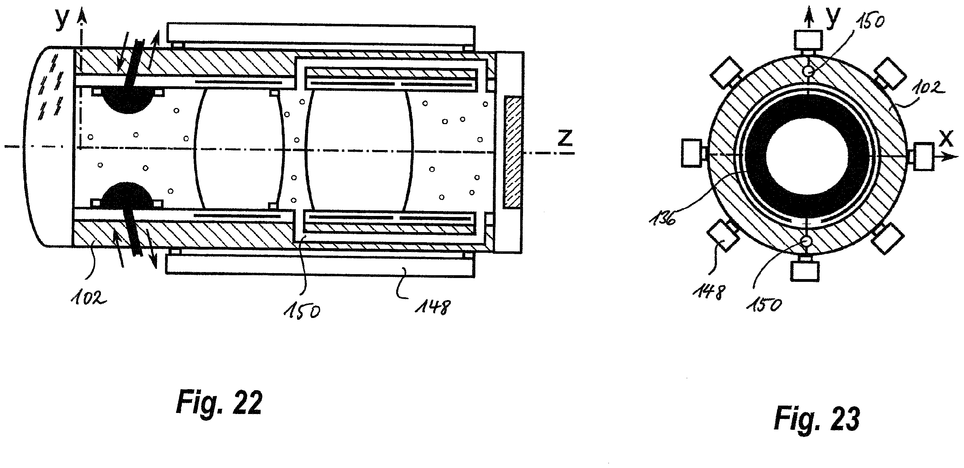

Eine Weiterbildung der vorliegenden Erfindung ist in den Fig. 22 und 23 gezeigt. Gemäß dieser Ausführungsform ist das Gehäuse 102 flexibel ausgestaltet und ein Gehäuseaktuator 148 ist an der Außenseite des Gehäuses zum Deformieren desselben vorgesehen. Ein derartiger Gehäuseaktuator kann beispielsweise durch ein ferroelektrisches Flüssigkristallelastomer ("lyquid crystal elastomer", LCE) gebildet sein. Derartige elektrostriktive Materialien zeigen eine Gestaltänderung in Folge von angelegten elektrischen Feldern, aber auch Temperaturänderungen. Die LCEs werden häufig auch als künstliche Muskeln bezeichnet und können im Gegensatz zu piezoelektrischen Aktoren induzierte Spannungen von 400 % aufbauen. Im Vergleich zu harten Materialien haben solche Elastomere den Vorteil ihrer Flexibilität und höheren Bruchbeständigkeit. Durch gezielten Druck des Gehäuseaktuators 148 auf den Bereich der verschieblichen Linse kann diese näher oder weiter entfernt von dem Bildsensor 129 positioniert werden. Ein Druckausgleich zwischen den beiden Kompartimenten, in denen die erste Flüssigkeit 106 sich je nach Position der dritten Flüssigkeit 110 aufhält, ist über Druckausgleichskanäle 150 möglich.

Zusammenfassend sind die technischen Merkmale der vorliegenden Erfindung zum einen die Verwendung einer flexiblen Folie als multifunktionales Substrat, zum anderen die Kombination von festen und/oder flüssigen optischen Komponenten, aber auch die Verwendung von Flüssig-Flüssig-Grenzflächen, um durchstimmbare optofluidische Komponenten zu definieren. Dies sind beispielsweise Linsen, Blenden, Prismen, Spiegel und Filter. Diverse Aktuierungsmechanismen (mechanisch, pneumatisch, hydraulisch, elektrofluidisch und thermisch) werden für miniaturisierte Optiken adaptiert und verwendet. Weiterhin kann die präzise Ausrichtung und Positionierung mehrerer optischer Komponenten durch die Verwendung eines einzigen Foliensubstrats erreicht werden und die optischen Komponenten können durch Oberflächenstrukturen auf der Folie definiert werden. Dadurch entfällt die aufwändige Fertigung von Einzelkomponenten, wie z. B. einzelner Linsen.

Die Vorteile für den Anwender sind die gesteigerte optische Funktionalität auf kleinstem Raum, die präzise und kostengünstige Fertigung und die Tatsache, dass komplexe Systeme bestehend aus mehreren Komponenten durch eine einzige Folie definiert werden können, wodurch der Fertigungsaufwand signifikant reduziert wird. In den obigen Ausführungen wurden abstimmbare optofluidische Blenden kombiniert mit festbrennweitigen Linsen und Faserkollimatoren für Endoskopoptiken sowie durchstimmbare Flüssig-Flüssig-Linsen, Flüssig-Flüssig-Prismen für miniaturisierte Abbildungsoptiken und rotierbare Flüssig-Flüssig-Spiegel für Beleuchtungs- und Scanneranwendungen beschrieben.

**Bezugszeichenliste:**

| **Bezugsziffer** | **Beschreibung** |
|---|---|
| 100 | Optofluidisches Bauelement |
| 102 | Gehäuse |
| 104 | Hohlraum |
| 106 | Erste Flüssigkeit |
| 108 | Zweite Flüssigkeit |
| 110 | Dritte Flüssigkeit |
| 112 | Optische Achse |
| 114 | Erste Elektrodenanordnung |
| 116 | Flexibler Träger |
| 118 | Innenwandung des Hohlraums |
| 120 | Offene Elektrode |
| 122 | Flüssig-flüssig-Grenzfläche |
| 124 | Zweite Elektrodenanordnung |
| 126 | Feste Linse |
| 128 | Lichtleitfaser |
| 130 | Optisches Fenster |
| 132 | Lichtstrahl |
| 134 | Prismaelektrodenanordnung |
| 136 | Opakes Material |
| 138 | Kanalstruktur |
| 140 | Elektrodenstruktur an der Apertur |
| 142 | Pinning-Barriere |
| 144 | Öffnung im Träger |
| 146 | Mikrospiegel |
| 148 | Gehäuseaktuator |
| 150 | Druckausgleichskanal |

## Patentansprüche

1. Optofluidisches Bauelement zum Ausbilden eines optischen Pfades für elektromagnetische Strahlung, wobei das optofluidische Bauelement (100) aufweist:
ein Gehäuse (102) mit einem Hohlraum (104), der zum Führen der Strahlung mit mindestens einer Fluidkomponente (106, 108, 110) gefüllt ist, wobei das Gehäuse (102) eine rohrförmige Gestalt hat und der darin gebildete Hohlraum einen kreisförmigen, polygonalen oder elliptischen Querschnitt hat.
eine Steuereinheit (114, 124, 134, 140; 138, 150) zum gesteuerten Verändern optischer Eigenschaften der Fluidkomponente,
wobei die Steuereinheit eine flexible Folie (116) mit mindestens einem elektrisch leitenden Element umfasst, die von dem Gehäuse (102) getrennt hergestellt und auf einer der Fluidkomponente zugewandten Innenfläche einer den Hohlraum begrenzenden Wandung angeordnet ist.

2. Optofluidisches Bauelement nach Anspruch 1, wobei das mindestens eine elektrisch leitende Element wenigstens teilweise gegenüber der mindestens einen Fluidkomponente isoliert ist.

3. Optofluidisches Bauelement nach einem der Ansprüche 1 oder 2, wobei die flexible Folie mehrlagig mit einer Vielzahl voneinander isolierter elektrisch leitender Elemente ausgeführt ist.

4. Optofluidisches Bauelement nach einem der vorhergehenden Ansprüche, wobei die Wandung des Hohlraums wenigstens teilweise flexibel ist und das optofluidische Bauelement weiterhin einen mindestens einen Gehäuseaktuator (148) zum Auslenken der Wandung umfasst.

5. Optofluidisches Bauelement nach einem der vorhergehenden Ansprüche, wobei die Wandung des Hohlraums opak oder wenigstens teilweise transparent ist.

6. Optofluidisches Bauelement nach einem der vorhergehenden Ansprüche, wobei eine optische Achse (112) des optofluidischen Bauelements wenigstens teilweise mit einer longitudinalen Symmetrieachse des Hohlraums zusammenfällt.

7. Optofluidisches Bauelement nach einem der vorhergehenden Ansprüche, wobei die flexible Folie geometrische Oberflächenstrukturen (142) und/oder unterschiedliche Oberflächenmaterialien zum Beeinflussen der Benetzungseigenschaften für die mindestens eine Fluidkomponente aufweist.

8. Optofluidisches Bauelement nach einem der vorhergehenden Ansprüche, das mindestens einen Bereich aufweist, der eine Linse, ein Prisma, eine Apertur, ein Filter oder einen Spiegel bildet.

9. Optofluidisches Bauelement nach einem der vorhergehenden Ansprüche, wobei an einer Außenseite der den Hohlraum begrenzenden Wandung mindestens ein Licht emittierendes und/oder mindestens ein Licht empfangendes optisches Bauelement angeordnet ist.

10. Optofluidisches Bauelement nach einem der vorhergehenden Ansprüche, wobei in dem Hohlraum mindestens zwei Kompartimente durch nicht miteinander mischbare Fluide mit unterschiedlichen optischen Eigenschaften ausgebildet sind.

11. Optofluidisches Bauelement nach einem der vorhergehenden Ansprüche, wobei die flexible Folie an der der mindestens einen Fluidkomponente zugewandten Oberfläche Fluidführungsstrukturen zum definierten Befüllen des Hohlraumes aufweist.

12. Optofluidisches Bauelement nach einem der vorhergehenden Ansprüche, wobei mindestens ein Optikaktuator zum Steuern der optischen Eigenschaften der mindestens einen Fluidkomponente an der flexiblen Folie angeordnet ist, und/oder wobei der Optikaktuator mindestens eine Elektrodenanordnung zum Aktuieren der mindestens einen Fluidkomponente mittels direkter Elektrobenetzung (electro wetting, EW), Electrowetting-on-Dielectrics (EWOD) oder Dielektrophorese und/oder eine Heizstruktur zum Aktuieren der mindestens einen Fluidkomponente mittels Thermokapillarkräften aufweist, und/oder
wobei das optofluidische Bauelement weiterhin eine Pumpenstruktur zum hydraulischen oder pneumatischen Aktuieren der mindestens einen Fluidkomponente aufweist.

13. Optofluidisches Bauelement nach einem der vorhergehenden Ansprüche, wobei die flexible Folie an der den Hohlraum begrenzenden Wandung mittels einer Klebung, einer Schweißung und/oder eines Formschlusses fixiert ist.

14. Optofluidisches Bauelement nach einem der vorhergehenden Ansprüche, wobei das Gehäuse in einem Strahlungseintrittsbereich mindestens eine erste Linsenstruktur (126) aufweist, welche den Hohlraum fluiddicht versiegelt.

15. Optofluidisches Bauelement nach einem der vorhergehenden Ansprüche, wobei das Gehäuse in einem Strahlungsaustrittsbereich mindestens ein optisches Fenster (130) oder eine zweite Linsenstruktur aufweist, welche den Hohlraum fluiddicht versiegelt.

## Claims

1. Opto-fluidic component part for forming an optical path for electromagnetic radiation, wherein the opto-fluidic component (100) comprises:
a housing (102) having a cavity (104) that is filled with at least one fluid component (106, 108, 110) in order to guide the radiation, wherein the housing (102) is tubular and the cavity formed therein has a circular, polygonal or elliptic cross section,
a control unit (114, 124, 134, 140; 138, 150) for varying of the optical properties of the fluid component in a controlled manner,
wherein the control unit comprises a flexible film (116) having at least one electrically conductive element, which film is produced separately from the housing (102) and is arranged on one of the inner faces of a wall which delimits the cavity, which inner faces face the fluid component.

2. Opto-fluidic component part according to claim 1, wherein the at least one electrically conductive element is isolated from the at least one fluid component at least in part.

3. Opto-fluidic component part according to either claim 1 or claim 2, wherein the flexible film is multi-layered and has a plurality of electrically conductive elements which are isolated from one another.

4. Opto-fluidic component part according to any of the preceding claims, wherein the wall of the cavity is flexible at least in part, and the opto-fluidic component part further comprises at least one housing actuator (148) for deflecting the wall.

5. Opto-fluidic component part according to any of the preceding claims, wherein the wall of the cavity is opaque, or transparent at least in part.

6. Opto-fluidic component part according to any of the preceding claims, wherein an optical axis (112) of the opto-fluidic component part coincides with a longitudinal symmetry axis of the cavity at least in part.

7. Opto-fluidic component part according to any of the preceding claims, wherein the flexible film comprises geometric surface structures (142) and/or different surface materials for influencing the wetting properties for the at least one fluid component.

8. Opto-fluidic component part according to any of the preceding claims, comprising at least one region which forms a lens, a prism, an aperture, a filter or a mirror.

9. Opto-fluidic component part according to any of the preceding claims, wherein at least one light-emitting and/or at least one light-receiving optical component part is arranged on an outer face of the wall which delimits the cavity.

10. Opto-fluidic component part according to any of the preceding claims, wherein at least two compartments are formed in the cavity by fluids that are immiscible with one another and that have different optical properties.

11. Opto-fluidic component part according to any of the preceding claims, wherein the flexible film on the surface which faces the at least one fluid component comprises fluid-guiding structures for filling the cavity in a precise manner.

12. Opto-fluidic component part according to any of the preceding claims, wherein at least one optical actuator for controlling the optical properties of the at least one fluid component is arranged on the flexible film, and/or wherein the optical actuator comprises at least one electrode assembly for actuating the at least one fluid component by means of direct electrowetting (EW), electrowetting-on-dielectrics (EWOD) or dielectrophoresis, and/or comprises a heat structure for actuating the at least one fluid component by means of thermocapillary forces, and/or wherein the opto-fluidic component part further comprises a pump structure for hydraulically or pneumatically actuating the at least one fluid component.

13. Opto-fluidic component part according to any of the preceding claims, wherein the flexible film is fixed to the wall which delimits the cavity by means of bonding, welding and/or a form-fitting connection.

14. Opto-fluidic component part according to any of the preceding claims, wherein the housing comprises at least one first lens structure (126) in a radiation entry region, which structure seals the cavity in a fluid-tight manner.

15. Opto-fluidic component part according to any of the preceding claims, wherein the housing comprises at least one optical window (130) or a second lens structure in a radiation emergence region, which structure seals the cavity in a fluid-tight manner.

## Revendications

1. Elément optofluidique destiné à former un cheminement optique pour un rayonnement électromagnétique, l'élément optofluidique (100) comprenant :
un boitier (102) avec une cavité (104), qui pour guider le rayonnement, est remplie d'un composant fluide (106, 108, 110), le boitier (102) présentant une configuration de forme tubulaire, et la cavité qui y est formée, possédant une section transversale de forme circulaire, polygonale ou elliptique,
une unité de commande (114, 124, 134, 140; 138, 150) destinée à modifier, de manière commandée, des propriétés optiques du composant fluide,
l'unité de commande comportant une feuille flexible (116) avec au moins un élément électriquement conducteur, qui est fabriquée de manière séparée du boitier (102) et est agencée sur une surface intérieure dirigée vers le composant fluide, de la paroi délimitant la cavité.

2. Elément optofluidique selon la revendication 1, dans lequel ledit au moins un élément électriquement conducteur est isolé, au moins en partie, par rapport audit au moins un composant fluide.

3. Elément optofluidique selon l'une des revendications 1 ou 2, dans lequel la feuille flexible est de configuration multicouche avec un grand nombre d'éléments électriquement conducteurs, isolés les uns des autres.

4. Elément optofluidique selon l'une des revendications précédentes, dans lequel la paroi de la cavité est au moins en partie flexible, et l'élément optofluidique comprend, par ailleurs, au moins un actionneur de boitier (148) destiné à produire une déviation de la paroi.

5. Elément optofluidique selon l'une des revendications précédentes, dans lequel la paroi de la cavité est opaque ou au moins partiellement transparente.

6. Elément optofluidique selon l'une des revendications précédentes, dans lequel un axe optique (112) de l'élément optofluidique coïncide au moins en partie avec un axe de symétrie longitudinal de la cavité.

7. Elément optofluidique selon l'une des revendications précédentes, dans lequel la feuille flexible présente des structures de surface (142) géométriques, et/ou différents matériaux de surface pour influencer les propriétés de mouillage pour ledit au moins un composant fluide.

8. Elément optofluidique selon l'une des revendications précédentes, qui présente au moins une zone qui forme une lentille, un prisme, une ouverture, un filtre ou un miroir.

9. Elément optofluidique selon l'une des revendications précédentes, dans lequel sur un côté extérieur de la paroi délimitant la cavité, est agencé au moins un élément optique d'émission de lumière et/ou au moins un élément optique de réception de lumière.

10. Elément optofluidique selon l'une des revendications précédentes, dans lequel à l'intérieur de la cavité sont formés au moins deux compartiments, par des fluides non miscibles entre eux et présentant des propriétés optiques différentes.

11. Elément optofluidique selon l'une des revendications précédentes, dans lequel la feuille flexible présente sur sa surface dirigée vers ledit au moins un composant fluide, des structures de guidage de fluide pour un remplissage défini de la cavité.

12. Elément optofluidique selon l'une des revendications précédentes,
dans lequel au moins un activateur optique pour commander les propriétés optiques dudit au moins un composant fluide est agencé sur la feuille flexible, et/ou
dans lequel l'activateur optique comprend au moins un agencement d'électrodes destiné à activer ledit au moins un composant fluide par électro-mouillage direct (electro wetting, EW), électro-mouillage sur diélectrique (EWOD) ou diélectrophorèse, et/ou une structure chauffante pour activer ledit au moins un composant fluide par des forces thermo-capillaires, et/ou
dans lequel l'élément optofluidique comprend, par ailleurs, une structure de pompe pour activer par voie hydraulique ou pneumatique ledit au moins un composant fluide.

13. Elément optofluidique selon l'une des revendications précédentes, dans lequel la feuille flexible est fixée à la paroi délimitant la cavité, par collage, par soudage et/ou par une liaison par complémentarité de formes.

14. Elément optofluidique selon l'une des revendications précédentes, dans lequel le boitier présente, dans une zone d'entrée de rayonnement, au moins une première structure de lentille (126), qui assure un scellage étanche aux fluides, de la cavité.

15. Elément optofluidique selon l'une des revendications précédentes, dans lequel le boitier présente, dans une zone de sortie de rayonnement, au moins une fenêtre optique (130) ou une deuxième structure de lentille, qui assure un scellage étanche aux fluides, de la cavité.
